# EUROPÄISCHE PATENTSCHRIFT

(11) **EP 2 321 107 B1**
(45) Veröffentlichungstag und Bekanntmachung des Hinweises auf die Patenterteilung: **05.09.2012**
(21) Anmeldenummer: 09779680.9
(22) Anmeldetag: 09.06.2009
(51) Int. Cl.: B29C 41/18, B29C 41/20, B60R 13/02

(54) **Kunststoffhaut mit elektrolumineszenten Elementen**
Plastic skin with electroluminescent elements
Peau dotée d'éléments électroluminescents

(30) Priorität: 29.08.2008 DE 102008045015
(43) Veröffentlichungstag der Anmeldung: 18.05.2011
(73) Patentinhaber: Johnson Controls Interiors GmbH & Co. KG, 47929 Grefrath (DE)
(72) Erfinder: SOSTMANN, Stefan, 30855 Langenhagen (DE); SEIDEL, Christian, 30163 Hannover (DE)
(74) Vertreter: Liedtke, Markus
(86) Internationale Anmeldenummer: PCT/EP2009/057070
(87) Internationale Veröffentlichungsnummer: WO 2010/022997

(56) Entgegenhaltungen:
- WO-A-2007/096016
- DE-A1-102005 038 680
- GB-A- 2 418 651

## Beschreibung

Die Erfindung betrifft ein Verfahren zur Herstellung einer werkzeugfallenden Formhaut als Oberflächenbelag von beschichteten Gegenständen, bei dem ein pulverförmiges Kunststoffmaterial in eine Werkzeug- oder Reaktionsform gegeben und dort in einem Sinterverfahren aufgeschmolzen wird, vorzugsweise durch Rotationssintern, wobei die Formhaut mindestens ein aus mehreren Funktions- oder Trägerschichten bestehendes flächiges elektrolumineszentes Element aufweist, welches in die Kunststoffhaut eingebettet und/oder von der Kunststoffhaut überzogen ist.

Genarbte, gemusterte, oder fein strukturiert Kunststoffhäute sind als Oberflächen für Gegenstände weithin bekannt und werden z. B. verwendet für die Innenverkleidung in Fahrzeugen, hier oft als relativ weiche unterschäumte Folien mit angenehmer Haptik etwa für die Verkleidung von Armaturenbrettern oder die Innenschalen von Türen etc. In entsprechender Anpassung von Festigkeit und Design werden solche Folien natürlich auch für andere hochwertig beschichtete Waren genutzt.

Im Stand der Technik sind zur Herstellung solcher Kunststoffhäute verschiedene Verfahren bekannt, zum Beispiel Walz- und/oder Prägeverfahren zur Herstellung von "endlosen" Folienbahnen aus thermoplastischem Kunststoff, oder Verfahren zur Herstellung von werkzeugfallenden einzelnen Formhäuten, also von Kunststoff-Formteilen.

Bei den Walz- und Prägeverfahren wird eine als Bahnenware vorliegende thermoplastische Folie mit Hilfe einer Prägewalze mit einer dreidimensional strukturierten, geprägten Oberfläche, also etwa einer genarbten "Lederoberfläche" versehen.

Als werkzeugfallende Formhäute sind hier mehr oder weniger steife Kunststoff-Formteile bezeichnet, die beispielsweise durch verschiedene Sinter- oder Sprühverfahren in Formwerkzeugen hergestellt werden, bei denen ein oder mehrere flüssige oder pulverförmige Komponenten in eine Form gegeben werden und dort ausreagieren / aushärten. Werkzeugfallende Formhäute entstehen somit auch durch Rotationssintern, beispielsweise durch Verfahren zur Herstellung so genannter Slush-Häute.

Bei diesen werkzeugfallenden Verfahren ergibt sich zudem die Möglichkeit, die Oberflächenstruktur / -textur, d.h. die Oberfläche der Kunststoffliaut, also etwa das Erscheinungsbild einer Narbe, und die Geometrie des gesamten Bauteiles in einem einzigen Formprozess während der Herstellung festzulegen. Dazu wird zum Beispiel die Narbstruktur und Bauteilgeometrie als Negativ in eine Werkzeugform gebracht, die Kunststoffhaut durch Sinter- oder Sprühverfahren ausgeformt und danach entnommen.

Sowohl die Bahnenware als auch die Formhäute werden in der Regel rückseitig mit einer Schicht aus Kunststoffschaum versehen, entweder nach dem Prägen und/oder nach Einbringen / Tiefziehen in die Bauteilform (Bahnenware) oder bereits in der Werkzeugform, in der die Kunststoffhaut hergestellt wurde (Formhäute). Natürlich sind weitere Verfahren, wie etwa Streichverfahren, zur Schaumbeschichtung bekannt. Durch dieses anschließende "Hinterschäumen" erhält man ein bereits recht steifes dreidimensional ausgeformtes Bauteil. Das Hinterschäumen stellt hierbei nur eine Möglichkeit dar, für die Kunststoffhaut eine Trägerstruktur zu bilden. Gleichermaßen ist etwa das Aufkleben von Struktur-Trägerelementen aus hartem Kunststoff bekannt.

Die EP 1 190 828 A1 beschreibt ein Verfahren zur Herstellung von werkzeugfallenden Schmelzkörpern / Gusskörpern, wie etwa Armaturenbretter, Türverkleidungen oder Handschuhfächer, bei dem eine geteilte Unterform zunächst und mindestens teilweise mit einer elastischen Folie ausgelegt wird, welche die in der Form vorhandene Nähte überdeckt, und welche auf ihrer Innenseite eine Maserung, beispielsweise eine Ledertextur aufweist. Auf die elastische Folie wird eine reaktive Mischung gesprüht, die dann die Außenhaut des Bauteiles bildet, bevor weitere Verstärkungen oder Schaumlagen mit verschiedenen verschieden Sprüh- oder Schmelz-Formgebungsverfahren aufgebracht werden.

Üblicherweise werden die Formhäute mit der Trägerstruktur nach dem Herstellungsprozess noch einmal sauber bearbeitet, d.h. evtl. vorhandene Hautränder werden abgeschnitten und bei Armaturenbrettern z. B. dann die nötige Ausnehmungen oder Löcher für Instrumente, Schalter, Zierleisten, Radio, Beleuchtungskörper etc. hergestellt. Danach werden beispielsweise alle Schalter und Beleuchtungskörper einzeln in das Armaturenbrett eingebaut und verdrahtet bzw. mit Anschlußleitungen versehen, die dann beim Einbau ins Fahrzeug angeschlossen werden können. Gleiches gilt für den Einbau von Instrumenten, Lautsprechern etc. Zierleisten und Halterungen müssen ebenfalls noch angebracht werden.

Insgesamt sind also noch ein erheblicher Aufwand, eine Reihe von zeit- und kostenintensiven Fertigungsschritten und eine logistische Planung erforderlich bis zur Übergabe eines einbaufertigen Armaturenbrettes, eines Türeinsatzes oder ähnlicher Bauteile mit Funktionselementen an den weiterverarbeitenden Betrieb, hier nämlich an den Fahrzeughersteller.

Zur Verringerung dieses Fertigungsaufwandes wurde auch bereits vorgeschlagen, elektrische Leiter oder dünne Folienschaltungen, d.h. mit dünnen aufgedampften oder aufgeklebten metallischen Leitern versehene Folien, direkt mit der Rückseite der Formhäute oder Folien vor oder nach der Hinterschäumung zu verbinden, d. h. im Wesentlichen zu kaschieren oder zu laminieren.

Insbesondere bei der Einbindung von Leitern für Leuchtmittel, die aufgrund der erforderlichen Stromstärken relativ "dick" ausgebildet werden müssen, entsteht das Problem, dass bei dem Fügen der zwei unterschiedlichen Materialien (Formhäute oder Folien und Leiter) durch den Anpressdruck während des Kaschiervorgangs die Dekoroberfläche, d.h. die von außen sichtbare Oberfläche der Kunststoffhaut geschädigt wird.

Weiterhin hinterlassen "dicke" Leiter Markierungen an der Dekoroberfläche, wenn sie bei zu hohen Temperaturen laminiert und bei unterschiedlicher Schwindung der einzelnen Materialien miteinander kaschiert werden und danach unterschiedlich abkühlen.

Weiterhin besteht das Problem, dass die Formhäute oder Folien und die Leiter bei der Lagerung in der Wärme unterschiedliche Wärmeausdehnungskoeffizienten besitzen und dadurch eine zweite Bahn, die ggf. hinter die Dekoroberfläche kaschiert wurde, sichtbar wird.

Außerdem besteht das Problem, das bestimmte Bereiche der Oberfläche, gerade bei Oberflächen, die durch den Slush-Prozess (Rotationssintern) hergestellt werden beim Entformen Knickstellen durch unterschiedliche Steifigkeiten hervorrufen.

Hierzu wurde auch bereits vorgeschlagen, elektrolumineszente Elemente oder Schichten in oder auf Bauteile bzw. Verkleidungsteilen für den Innenraum von Kraftfahrzeugen anzubringen.

So offenbart die CA 2 454 911 A1 einen Fahrzeughimmel als Formteil, welcher mit streifenförmigen elektrolumineszenten Elementen versehen ist. Der Fahrzeughimmel besteht dabei aus einem geformten Träger, der mit einer Beschichtungsfolie zu einem Bauteil verpresst wird. Vor dem Verpressen werden elektrolumineszente Elemente in dem Träger positioniert, mit ihren Anschlusskabeln durch den Träger geführt und dann mit der aufgelegten Beschichtungsfolie überdeckt, fixiert und verpresst. Nachteilig sind die hier erforderlichen mehrfachen Positionier- und Pressvorgänge in den jeweils dafür erforderlichen Werkzeugen. Zudem können auch bei dieser Ausführung die elektrolumineszenten Elemente hinter die Dekoroberfläche/Beschichtungsfolie sichtbar werden.

Die DE 10 2005 038 680 A1 offenbart ein Bauteil eines Kraftfahrzeuges mit einer dreidimensionalen Oberfläche, die eine elektroluminiszierende Schicht aufweist und zur Fixierung der Bauteilform mit thermoplastischem Kunststoff hinterspritzt ist. Damit werden im Wesentlichen kleinere nicht-flexible Leuchtkörper, wie z. B. beleuchtete

Tastschalter oder Leuchtmittel hergestellt. Die Herstellung größerer Teile gestaltet sich mit dieser Ausbildung eher schwierig. Weitever stand der technik ist aus der WO 2007/096016A, der DE 102005038680 A1 und der GB2418651A bekannt.

Für die Erfindung bestand daher die Aufgabe, ein Verfahren zur Herstellung einer Kunststoffhaut mit elektrolumineszenten Elementen bereitzustellen, das einerseits aufwendige Schritte in der Herstellung reduziert, problemlos innerhalb bestehender Herstellungsprozesse und -anlagen eingesetzt werden kann, für alle Verkleidungsteile und Baugrößen anwendbar ist und andererseits eine hohe Bauteilintegration mit einem gefälligen Erscheinungsbild der Kunststoffhaut kombiniert.

Gelöst wird diese Aufgabe durch die Merkmale des Hauptanspruchs. Weitere vorteilhafte Ausbildungen sind in den Unteransprüchen enthalten.

Dabei wird eine äußere Funktions- oder Trägerschicht des elektrolumineszenten Elementes unter Verwendung eines Kunststoffmaterials hergestellt, welches im Wesentlichen identisch ist mit dem pulverförmige Kunststoffmaterial der Formhaut. Das elektrolumineszente Element wird mit dieser äußeren Funktions- oder Trägerschicht auf die noch nicht vollständig ausgehärtete und abgekühlte Formhaut aufgebracht und mit letzterer verbunden.

Die erfindungsgemäße Lösung kombiniert und verbindet damit das Material und den Prozess der Kunststoffhautherstellung durch Sintern oder Rotationssintern mit dem Herstellprozess der elektrolumineszenten Elemente (EL-Elemente). Das Material der Kunststoffhäute, meistens Polyvinylchlorid (PVC), thermoplastisches Polyurethan (TPU) oder thermoplastisches Polyethylen (TPE) kann dabei als Laminierung und Schutz der Schichten der elektrolumineszenten Elemente dienen. Das führt dazu, dass der eigentliche Träger des EL-Elementes die gleichen Materialeigenschaften hat wie die Kunststoffhaut und ein Durchzeichnen der EL-Elemente damit verhindert werden kann.

Elektrolumineszenz, hier die Leuchterscheinung elektrolumineszierender Elemente als Leuchtfolien, tritt auf, wenn ein elektrolumineszenzaktiver Leuchtstoff einem elektrischen Wechselfeld unterworfen wird, der durch dieses zum Leuchten angeregt wird. Typischerweise bestehen elektrolumineszente Elemente aus einer Leuchtpigmentschicht, in der Regel aus Zinksulfidpigmenten, einer dielektrischen Schicht, häufig aus Bariumtitanat, und einer Front- und Rückelektrode. Die Rückelektrode besteht typischerweise aus einem Gemisch von Silber und einem intrinsisch leitfähigen Polymer und die Frontelektrode aus einem leitfähigen und durchsichtigen Material (meist auch intrinsisch leitfähige Polymere). Die vier Komponenten sind jeweils in verschiedenen Pasten-Bindersystemen erhältlich und können in Standard-Drucktechniken zu EL-Leuchtelementen verarbeitet werden (z.B. Siebdrucktechnik).

Zum Anregen der EL-Leuchtelemente benötigt man in der Regel Wechselspannungen. Häufig verwendet man Wechselspannungen um die 100V, was aus Sicherheitsgründen standardmäßig ein Laminieren der EL-Elemente mit thermoplastischen Trägern erforderlich macht. Diese schützen die EL-Elemente auch vor äußeren Einflüssen, wie z.B. Feuchtigkeit. Natürlich sind je nach Aufbau der elektrolumineszenten Elemente auch Wechselspannungen höherer oder niedriger Voltzahl zur Anregung geeignet.

Eine vorteilhafte Ausbildung des Verfahrens besteht darin, dass das elektrolumineszente Element mit einer äußeren Funktions- oder Trägerschicht aus demselben Kunststoffmaterial wie das der Formhaut zunächst separat hergestellt und danach als mehrschichtige Folie auf die noch nicht vollständig ausgehärtete und noch in der Werkzeugform befindliche Formhaut aufgebracht und mit letzterer verschmolzen wird, wobei insbesondere eine erste besonders geeignete Art des Verfahrens darin besteht, dass die verschiedenen Schichten des elektrolumineszenten Elementes auf einer Basis-Folie aus demselben Kunststoffmaterial aufgebaut werden, welches auch für die Formhaut verwendet wird.

Dabei wird auf einer vorbereiteten dünnen Schicht (Folie) des Materials, wie es auch für die typischen Kunststoffhaut-Herstellverfahren, z.B. beim werkzeugfallenden Sinterverfahren verwendet wird, die verschiedenen Schichten des EL-Elementes aufgedruckt. Dies kann im Siebdruckverfahren oder in anderen gängigen Drucktechniken mit kommerziell erhältlichen EL-Pasten erfolgen. Diese vorbereiteten EL-Träger können dann auf einfache Weise in den bestehenden Herstellprozess integriert werden, indem sie beim Öffnen der Werkzuegform/Galvanoform (im werkzeugfallenden Herstellprozess) auf die noch heiße Haut aufgelegt werden. So wird der EL-Träger mit der Kunststoffhaut verschmolzen und ein eingebettetes / integriertes EL-Element gebildet.

Eine weitere vorteilhafte Ausbildung des Verfahrens besteht darin, dass die verschiedenen Schichten des elektrolumineszenten Elementes nacheinander auf die noch nicht vollständig ausgehärtete und noch in der Werkzeugform befindliche Formhaut aufgebracht und mit letzterer verbunden werden. Bei dieser Alternative können die verschiedenen Schichten des EL-Elementes mittels Drucktechniken und eines Industrieroboters nach Öffnen der Galvanoform direkt auf die Innenschicht der Kunststoffhaut aufgedruckt werden, wobei als weitere vorteilhafte Ausbildung des Verfahrens nach Aufbringen des elektrolumineszenten Elementes letzteres mit einem Lack oder einer Schicht aus Kunststoffmaterial abgedeckt wird, vorzugsweise mit einem Kunststoffmaterial wie das der Formhaut. Damit wird eine gute und vollständige Einbindung des elektrolumineszenten Elementes in der Formhaut erreicht.

Eine weitere vorteilhafte Ausbildung des Verfahrens besteht darin, dass die noch in der Werkzeugform befindliche Formhaut auf mindestens 110° C abgekühlt ist. Bei einer solchen Temperatur sind sowohl das Auflegen eines bereits separat hergestellten elektrolumineszenten Elementes als auch das Aufdrucken auf die Innenschicht der Kunststoffhaut ohne Probleme möglich.

Weitere vorteilhafte Ausbildungen des Verfahrens bestehen darin, dass die verschiedenen Schichten nacheinander durch Druckverfahren und /oder durch Aufbringen von Pastensystemen hergestellt werden.

Die Verbindung zwischen elektrolumineszentem Element und Kunststoffhaut kann natürlich auch durch Plastifizierung der Verbindungsgrenzen erfolgen, beispielsweise durch Zugabe von Lösungsmitteln oder auch durch Verklebung.

Eine weitere vorteilhafte Ausbildung des Verfahrens besteht darin, dass zwischen dem elektrolumineszenten Element und der Kunststoffhaut eine diffusionsdichte Schicht aufgebracht wird. Dadurch wird eine ungewünschte Diffusion von Weichmachern oder Lösungsmitteln in die Schichten des elektrolumineszenten Elementes verhindert.

Eine weitere vorteilhafte Ausbildung des Verfahrens besteht darin, dass zwischen dem elektrolumineszenten Element und der Kunststoffhaut eine Schicht aufgebracht wird, die eine Halogenisierungsreaktion zwischen Kunststoffhaut und elektrolumineszentem Element verhindert, also das Eindringen von Chlorverbindungen, wie sie im PVC enthalten sein können.

Eine weitere vorteilhafte Ausbildung des Verfahrens besteht darin, dass nach Aufbringen des elektrolumineszenten Elementes die Formhaut hinterschäumt wird, womit man auf einfache Weise ein kompakte und angenehm griffige Formhaut herstellen kann.

Eine weitere vorteilhafte Ausbildung des Verfahrens besteht darin, dass das Kunststoffmaterial der Formhaut mit einer so geringen Pigmentierung hergestellt wird, dass die Formhaut für das elektrolumineszente Element durchscheinend ist. Dadurch entfallen weitere Abdeckungen, Löcher oder Ausnehmungen in der Formhaut, die ja sonst erforderlich wären, um Licht durchscheinen zu lassen. Weiterhin ergeben sich durch bereichsweise, geometrisch oder in Form von Schriftzügen oder Logos ausgebildete Pigmentreduzierungen ungeahnte Möglichkeiten, beispielsweise Marken oder Schriftzüge "durch die Haut" leuchten zu lassen.

Vorteilhafterweise besteht das Kunststoffmaterial aus Polyvinylchlorid (PVC). Hierdurch ergibt sich im Hinblick auf das Sinterverfahren eine besonders gute Verarbeitbarkeit der Materialien in Relation zu den mechanischen Festigkeitseigenschaften der Kunststofthaut. Typischerweise sind also die elektrolumineszenten Elemente auf oder nahe der Rückseite der Kunststoffhaut angeordnet. Dies erleichtert die Herstellung auch bei komplizierten Formen der Kunststoffhaut.

Besonders geeignet ist das erfindungsgemäße Verfahren somit zur Herstellung einer Kunststoffhaut als Oberflächenbeschichtung für ein Verkleidungsteil für den Innenraum eines Fahrzeuges, also beispielsweise für ein Armaturenbrett, auf welchem dann leuchtende Bereiche, Schriftzüge, Logos, Warnhinweise oder Informationen "erscheinen". Durch solche funktionalen elektrolumineszenten Elemente in der Kunststoffhaut entfällt der alternative Einbau von separaten Schaltern, Sensoren, Leuchtmitteln etc. die wiederum als Einzelelemente sicher mit der Kunststoffhaut verbunden und mit einer Vielzahl von Anschlusskabeln versehen werden müssten.

Ebenfalls besonders geeignet ist die so hergestellte Kunststoffhaut zur Anwendung als Bezugsstoff für die Tür-Innenverkleidung oder für den Dachhimmel eines Kraftfahrzeuges nutzen, bei der Beleuchtungs- oder Signalelemente in der Kunststoffhaut integriert sind.

Anhand eines Ausführungsbeispieles soll die Erfindung näher erläutert werden. Es zeigen
- Fig. 1: eine nach dem erfindungsgemäßen Verfahren hergestellte Formhaut
- Fig. 2: den Aufbau eines in der Formhaut integrierten separat hergestellten elektrolumineszenten Elementes

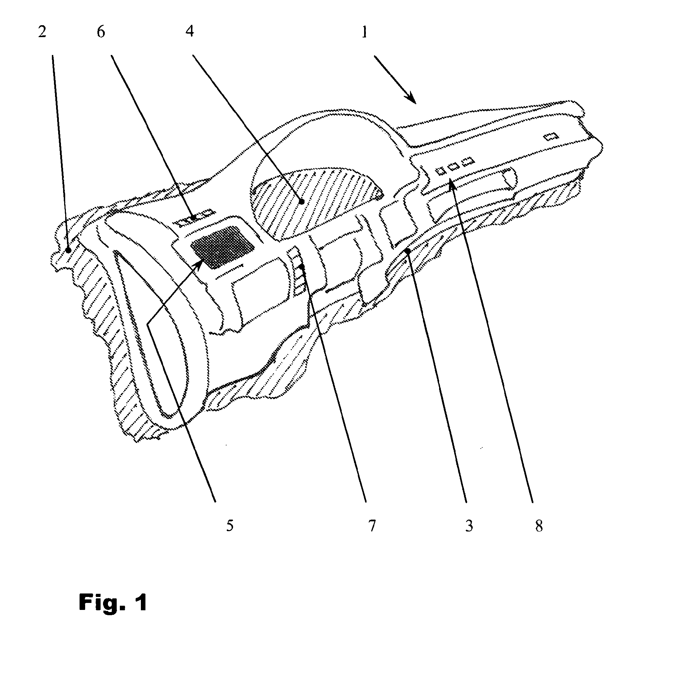

Die Fig. 1 zeigt hierzu eine nach dem erfindungsgemäßen Verfahren hergestellte Formhaut 1, nämlich eine so genannte Slush-Haut für ein Armaturenbrett eines PKW, wie sie nach dem Rotationssinterverfahren hergestellt wird. Die Kontur des Armaturenbrettes ist dabei bereits deutlich ausgeprägt, so dass die Formhaut ohne weiteres auf eine entsprechend ausgebildete versteifende Unterkonstruktion, einen so genannten Träger aufgebracht werden kann.

Bei den schraffierten Bereiche 2, 3 der Formhaut handelt es sich um überschüssige Formränder, die in der Nachbearbeitung entfernt werden. Der schraffierte Bereich 4 wird ebenfalls in der Nachbearbeitung ausgeschnitten und bildet dann die Ausnehmung für die später einzusetzenden Anzeigeinstrumente.

Eingebettet in der Formhaut sind elektrolumineszenten Elemente für Beleuchtungs- und Signalübertragungselemente 5, 6, 7 und 8, nämlich für das Beleuchtungselement 5, für die als Kontroll-Leuchten dienenden beleuchteten Signal- und Informationselemente 6 und 7 und für den "durchscheinend erleuchteten" Schriftzug 8 als Hersteller- oder Typbezeichnung des Fahrzeuges. Alle diese elektrolumineszenten Elemente kontaktieren Leiterbahnen bzw. Anschlüsse an der Rückseite der Formhaut und können beim Einbau des Armaturenbrettes direkt mit der Bordelektrik bzw. den Steuergeräten des Kraftfahrzeuges verbunden werden.

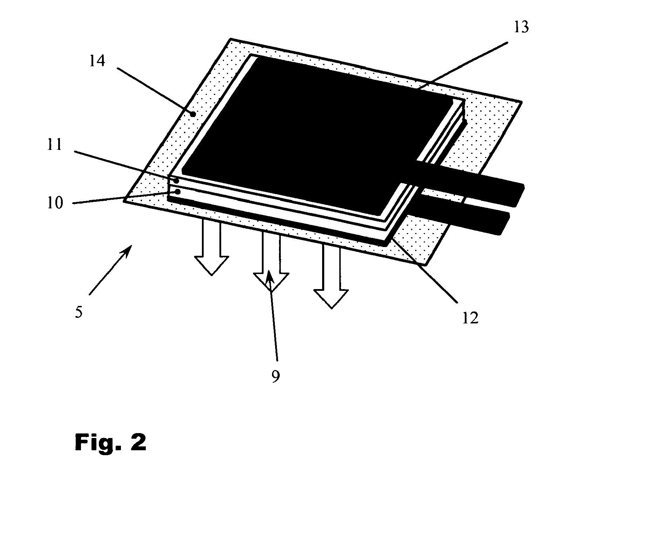

Fig. 2 zeigt den typischen Aufbau des in der nach dem erfindungsgemäßen Verfahren hergestellte Formhaut integrierten und gemäß Anspruch 2 separat hergestellten elektrolumineszenten Elementes 5, welches in der Nähe der Rückseite der Formhaut in letztere eingebettet ist und in Richtung der Pfeile 9 durch die Formhaut leuchtet. Das elektrolumineszente Element 5 besteht aus einer Leuchtpigmentschicht 10 aus hochaktiven Zinksulfidpigmenten, einer dielektrischen Schicht 11 aus Bariumtitanat und einer Front-und Rückelektrode 12 und 13 und einer Trägerschicht 14. Die Rückelektrode 13 besteht aus einem Gemisch von Silber und einem intrinsisch leitfähigen Polymer. Die Frontelektrode 12 besteht aus einem leitfähigen und durchsichtigen intrinsisch leitfähigen Polymer. Die in diesem Fall untere Trägerschicht 14 besteht aus einem Kunststoff, der im Wesentlichen identisch ist mit dem pulverförmigen Kunststoffmaterial der Formhaut, wobei die Trägerschicht nahezu durchsichtig ist. Das elektrolumineszente Element wird mit der Trägerschicht 14 auf die noch nicht vollständig ausgehärtete und abgekühlte Formhaut aufgebracht und mit letzterer verbunden. Zur Anregung des Leuchteffektes wird an den Elektroden 12 und 13 eine Wechselspannung von 48 V angelegt.

Die Trägerschicht kann in einer anderen Ausführung auch oben befinden und beispielsweise mit ihrem über die anderen Schichten hervorstehenden Rand mit der Kunststoffhaut verbunden sein, sodass die übrigen Schichten 10, 11, 12, und 13 des elektrolumineszenten Elementes zwischen der Trägerschicht 14 und der Kunststoffhaut liegen. Damit spart man eine zusätzliche Abdeckung.

### Bezugszeichenliste

### (Teil der Beschreibung)

- 1: Kunststoffhaut
- 2: Überschüssiger Formrand
- 3: Überschüssiger Formrand
- 4: Ausnehmung
- 5: Elektrolumineszentes Element als Beleuchtungselement
- 6: Elektrolumineszente Elemente als Kontrollleuchten
- 7: Elektrolumineszente Elemente als Kontrollleuchten
- 8: Elektrolumineszentes Element als Schriftzug
- 9: Leuchtrichtung / Lichtaustritt
- 10: Leuchtpigmentschicht
- 11: Dielektrische Schicht
- 12: Frontelektrode
- 13: Rückelektrode
- 14: Trägerschicht

## Patentansprüche

1. Verfahren zur Herstellung einer werkzeugfallenden Kunststoff-Formhaut (1) als Oberflächenbelag von beschichteten Gegenständen, bei dem ein pulverförmiges Kunststoffmaterial in eine Werkzeug- oder Reaktionsform gegeben und dort in einem Sinterverfahren aufgeschmolzen wird, vorzugsweise durch Rotationssintern, wobei die Formhaut (1) mindestens ein aus mehreren Funktions- oder Trägerschichten (10, 11, 12, 13, 14) bestehendes flächiges elektrolumineszentes Element (5, 6, 7, 8) aufweist, welches in die Kunststoffhaut (1) eingebettet und/oder von der Kunststoffhaut überzogen ist, **dadurch gekennzeichnet, dass** eine äußere Funktions- oder Trägerschicht (14) des elektrolumineszenten Elementes (5, 6, 7, 8) unter Verwendung eines Kunststoffmaterials hergestellt wird, welches im Wesentlichen identisch ist mit dem pulverförmigen Kunststoffmaterial der Formhaut (1), und dass das elektrolumineszente Element (5, 6, 7, 8) mit dieser äußeren Funktions- oder Trägerschicht (14) auf die noch nicht vollständig ausgehärtete und abgekühlte Formhaut aufgebracht und mit letzterer verbunden wird.

2. Verfahren nach Anspruch 1, bei dem das elektrolumineszente Element (5, 6, 7, 8) mit einer äußeren Funktions- oder Trägerschicht (14) aus demselben Kunststoffmaterial wie das der Formhaut zunächst separat hergestellt und danach als mehrschichtige Folie auf die noch nicht vollständig ausgehärtete und noch in der Werkzeugform befindliche Formhaut (1) aufgebracht und mit letzterer verschmolzen wird.

3. Verfahren nach Anspruch 2, bei dem die verschiedenen Schichten des elektrolumineszenten Elementes (5, 6, 7, 8) auf einer Basis-Folie (14) aus demselben Kunststoffmaterial aufgebaut werden, welches auch für die Formhaut (1) verwendet wird.

4. Verfahren nach Anspruch 1, bei dem die verschiedenen Schichten des elektrolumineszenten Elementes (5, 6, 7, 8) nacheinander auf die noch nicht vollständig ausgehärtete und noch in der Werkzeugform befindliche Formhaut (1) aufgebracht und mit letzterer verbunden werden.

5. Verfahren nach Anspruch 4, wobei die noch in der Werkzeugform befindliche Formhaut (1) auf mindestens 110° C abgekühlt ist.

6. Verfahren nach einem der Ansprüche 3 bis 5, bei dem die verschiedenen Schichten nacheinander durch Druckverfahren aufgebracht werden.

7. Verfahren nach einem der Ansprüche 3 bis 6, bei dem die verschiedenen Schichten nacheinander durch Aufbringen von Pastensystemen hergestellt werden.

8. Verfahren nach einem der Ansprüche 1 bis 7, bei dem zwischen dem elektrolumineszenten Element (5, 6, 7, 8) und der Kunststoff-Formhaut (1) eine diffusionsdichte Schicht aufgebracht wird.

9. Verfahren nach einem der Ansprüche 1 bis 8, bei dem zwischen dem elektrolumineszenten Element (5, 6, 7, 8) und der Kunststoffhaut (1) eine Schicht aufgebracht wird, die eine Halogenisierungsreaktion zwischen Kunststoffhaut (1) und elektrolumineszentem Element verhindert.

10. Verfahren nach einem der Ansprüche 1 bis 9, bei dem nach Aufbringen des elektrolumineszenten Elementes (5, 6, 7, 8) letzteres mit einem Lack oder einer Schicht aus Kunststoffmaterial abgedeckt wird, vorzugsweise mit einem Kunststoffmaterial wie das der Formhaut (1).

11. Verfahren nach einem der Ansprüche 1 bis 10, bei dem nach Aufbringen des elektrolumineszenten Elementes (5, 6, 7, 8) die Formhaut (1) hinterschäumt wird.

12. Verfahren nach einem der Ansprüche 1 bis 11, bei dem das Kunststoffmaterial der Formhaut (1) mit einer so geringen Pigmentierung hergestellt wird, dass die Formhaut (1) im Bereich des elektrolumineszenten Elementes (5, 6, 7, 8) durchscheinend ist.

13. Verfahren nach einem der Ansprüche 1 bis 12, bei dem das Kunststoffmaterial aus Polyvinylchlorid (PVC) besteht.

## Claims

1. Procedure for manufacturing an off-tool synthetic material moulded skin (1) as a surface layer of coated objects, in which a powdery synthetic material is put in a tool mould or in a reaction mould and fused in a sintering process and preferably by rotational sintering therein, while the moulded skin (1) presents at least one two-dimensional electroluminescent element (5, 6, 7, 8) consisting of several functional layers or substrate layers (10, 11, 12, 13, 14), which is embedded in the synthetic-material skin (1) and/or coated by the synthetic-material skin, **characterized in that** an external functional layer or substrate layer (14) of the electroluminescent element (5, 6, 7, 8) is made using a synthetic material which is essentially identical with the powdery synthetic material of the moulded skin (1), and **in that** the electroluminescent element (5, 6, 7, 8) is applied with this external functional layer or substrate layer (14) to the moulded skin and bonded to the latter while the moulded skin is not fully cured and cooled down yet.

2. Procedure as claimed in claim 1, in which the electroluminescent element (5, 6, 7, 8) with an external functional layer or substrate layer (14) consisting of the same synthetic material as the one of the moulded skin is first manufactured separately and then applied as a multilayer film to and fused with the moulded skin (1) which is not fully cured yet and still in the tool mould.

3. Procedure as claimed in claim 2, in which the different layers of the electroluminescent element (5, 6, 7, 8) are built on a base film (14) consisting of the same synthetic material which is also used for the moulded skin (1).

4. Procedure as claimed in claim 1, in which the different layers of the electroluminescent element (5, 6, 7, 8) are successively applied to the moulded skin (1) and bonded to the latter while the moulded skin (1) is not fully cured yet and still in the tool mould.

5. Procedure as claimed in claim 4, in which the moulded skin (1), while still being in the tool mould, has cooled down to at least 110° C.

6. Procedure as claimed in any claim 3 through 5, in which the different layers are applied successively using printing procedures.

7. Procedure as claimed in any claim 3 through 6, in which the different layers are built successively by applying paste systems.

8. Procedure as claimed in any claim 1 through 7, in which a diffusion-tight layer is applied between the electroluminescent element (5, 6, 7, 8) and the synthetic material moulded skin (1).

9. Procedure as claimed in any claim 1 through 8, in which a layer, which prevents a halogenation reaction between synthetic-material skin (1) and electroluminescent element, is applied between the electroluminescent element (5, 6, 7, 8) and the synthetic-material skin (1).

10. Procedure as claimed in any claim 1 through 9, in which, after applying the electroluminescent element (5, 6, 7, 8), the latter is covered with enamel or with a layer of synthetic material, preferably with a synthetic material like the one of the moulded skin (1).

11. Procedure as claimed in any claim 1 through 10, in which the moulded skin (1) is foam-backed after applying the electroluminescent element (5, 6, 7, 8).

12. Procedure as claimed in any claim 1 through 11, in which the synthetic material of the moulded skin (1) is made with such a low pigmentation that the moulded skin (1) is translucent in the area of the electroluminescent elements (5, 6, 7, 8).

13. Procedure as claimed in any claim 1 through 12 in which the synthetic material consists of polyvinylchloride (PVC).

## Revendications

1. Procédé de fabrication d'une pellicule en plastique moulé (1) usinée par outil en tant que revêtement de surface d'objets revêtus, où une matière plastique pulvérulente est versée dans un moule à outil ou à réaction où elle est fondue par frittage, de préférence par frittage par rotation, la pellicule moulée (1) comportant un élément électroluminescent (5, 6, 7, 8) plat constitué de plusieurs couches fonctionnelles ou de support (10, 11, 12, 13, 14), lequel est enrobé dans la pellicule plastique (1) et/ou revêtu par la pellicule plastique, **caractérisé en ce qu'**une couche fonctionnelle ou de support extérieure (14) de l'élément électroluminescent (5, 6, 7, 8) est fabriquée en utilisant une matière plastique, laquelle est sensiblement identique à la matière plastique pulvérulente de la pellicule moulée (1), et **en ce que** l'élément électroluminescent (5, 6, 7, 8) est appliqué avec ladite couche fonctionnelle ou de support extérieure (14) sur la pellicule moulée non encore complètement durcie et refroidie, et lié à celle-ci.

2. Procédé selon la revendication 1, où l'élément électroluminescent (5, 6, 7, 8) est d'abord fabriqué séparément avec une couche fonctionnelle ou de support extérieure (14) à partir de la même matière plastique que la pellicule moulée, avant d'être appliqué comme feuille à plusieurs couches sur la pellicule moulée (1) non encore complètement durcie et se trouvant encore dans le moule à outil et d'être fondu avec celle-ci.

3. Procédé selon la revendication 2, où les différentes couches de l'élément électroluminescent (5, 6, 7, 8) sont montées sur une feuille de base (14) avec la même matière plastique utilisée pour la pellicule moulée (1).

4. Procédé selon la revendication 1, où les différentes couches de l'élément électroluminescent (5, 6, 7, 8) sont appliquées successivement sur la pellicule moulée (1) non encore complètement durcie et se trouvant encore dans le moule à outil, et liées à celle-ci.

5. Procédé selon la revendication 4, où la pellicule moulée (1) se trouvant encore dans le moule à outil est refroidie au minimum à 110° C.

6. Procédé selon l'une des revendications 3 à 5, où les différentes couches sont appliquées successivement par impression.

7. Procédé selon l'une des revendications 3 à 6, où les différentes couches sont fabriquées successivement par application de systèmes à pâte.

8. Procédé selon l'une des revendications 1 à 7, où une couche étanche à la diffusion est appliquée entre l'élément électroluminescent (5, 6, 7, 8) et la pellicule en plastique moulé (1).

9. Procédé selon l'une des revendications 1 à 8, où une couche est appliquée entre l'élément électroluminescent (5, 6, 7, 8) et la pellicule plastique (1), laquelle empêche une réaction d'halogénisation entre la pellicule plastique (1) et l'élément électroluminescent.

10. Procédé selon l'une des revendications 1 à 9, où, après application de l'élément électroluminescent (5, 6, 7, 8), celui-ci est recouvert d'un vernis ou d'une couche en matière plastique, de préférence avec une matière plastique identique à celle de la pellicule moulée (1).

11. Procédé selon l'une des revendications 1 à 10, où, après application de l'élément électroluminescent (5, 6, 7, 8), la pellicule moulée (1) est garnie de mousse.

12. Procédé selon l'une des revendications 1 à 11, où la matière plastique de la pellicule moulée (1) est fabriquée avec une pigmentation si réduite que la pellicule moulée (1) est translucide dans la zone de l'élément électroluminescent (5, 6, 7, 8).

13. Procédé selon l'une des revendications 1 à 12, où la matière plastique est en chlorure de polyvinyle (PVC).
